# EUROPÄISCHE PATENTSCHRIFT

(11) **EP 2 432 942 B1**
(45) Veröffentlichungstag und Bekanntmachung des Hinweises auf die Patenterteilung: **21.11.2012**
(21) Anmeldenummer: 11725051.4
(22) Anmeldetag: 07.06.2011
(51) Int. Cl.: E02F 3/38, E02F 3/42, E02F 9/20, B66C 23/82, B66F 9/22, E02D 17/13, E02F 3/43

(54) **VERFAHREN ZUR ANSTEUERUNG EINES HYDRAULISCH BEWEGBAREN ARBEITSELEMENTES EINES ARBEITSGERÄTES SOWIE EIN ARBEITSGERÄT**
METHOD FOR ACTIVATING A HYDRAULICALLY MOVABLE WORKING ELEMENT OF A WORKING MACHINE, AND A WORKING MACHINE
PROCÉDÉ DE COMMANDE D'UN ORGANE DE TRAVAIL DÉPLAÇABLE HYDRAULIQUEMENT D'UNE MACHINE DE TRAVAIL, ET MACHINE DE TRAVAIL CORRESPONDANTE

(30) Priorität: 11.06.2010 DE 102010023435
(43) Veröffentlichungstag der Anmeldung: 28.03.2012
(73) Patentinhaber: Kiesel, Toni, 88212 Ravensburg (DE)
(72) Erfinder: GMELIN, Wolfgang, 76684 Östringen (DE)
(74) Vertreter: Maser, Jochen
(86) Internationale Anmeldenummer: PCT/EP2011/059374
(87) Internationale Veröffentlichungsnummer: WO 2011/154396

(56) Entgegenhaltungen:
- WO-A1-03/064775
- DE-A1- 1 919 759
- DE-A1- 2 435 676
- GB-A- 2 076 777
- US-A- 3 481 251
- US-A- 3 664 527
- US-A- 5 467 829
- US-A1- 2002 011 013
- US-A1- 2007 130 808

## Beschreibung

Die Erfindung betrifft ein Verfahren zur Ansteuerung eines hydraulisch bewegbaren Arbeitselementes eines Arbeitsgerätes sowie ein solches Arbeitsgerät.

Bei Arbeitsgeräten mit bewegbaren Arbeitselementen handelt es sich beispielsweise um Bagger oder Krane mit Ausleger welche an einem Ausleger als Arbeitselement ein Anbaugerät zumeist austauschbar aufnehmen. Ein solches Anbaugerät kann beispielsweise ein Zwei- oder Mehrschalengreifer, ein Lasthaken, eine Schere, ein Löffel oder dergleichen sein. Des Weiteren kann es sich bei solchen Arbeitsgeräten um Schrott- Recyclinggeräte handeln, wie bspw. um eine Schrottschere, bei der das Arbeitselement als eine schwenkbare Backe mit einer Arbeitskante zum Schneiden oder Zermalmen von Materialien ausgebildet ist. Der Einsatzbereich solcher Arbeitsgeräte bestimmt sich im Wesentlichen nach der Größe des Arbeitsbereiches und der Tragfähigkeiten. Dabei ist es oftmals gewünscht, dass insbesondere im Nahbereich des Arbeitsgerätes hohe Traglasten umgesetzt werden können. Ein solches Anwendungsbeispiel stellt zum Beispiel das Heben von Pipelinerohren dar. Nach dem Ausheben eines Grabens ist darin das Rohr einzulegen. Zur Auslastung des Arbeitsgerätes wird ein Wechsel des Anbaugerätes vorgenommen, um diese beiden Tätigkeiten nacheinander durchzuführen.

Aus der DE 31 20 110 A1 ist ein hydraulisches Ladegerät mit einem Ausleger, einem Schwenkarm und einer Ladeschaufel bekannt, die mit hydraulischem Ausleger und Armzylinder bewegt werden. Dabei ist zwischen einem Tragarm und einem Oberwagen ein erster einfach wirkender Hubzylinder sowie parallel dazu angeordnet ein zweiter doppelt wirkender Hubzylinder angeordnet. Ein dritter Hubzylinder ist zwischen dem Tragarm und dem Schwenkarm positioniert, ein vierter Hubzylinder zwischen dem Schwenkarm und einer Schaufel. Durch eine aufwändige hydraulische Steuerungseinrichtung werden die einzelnen Arbeitszylinder gesteuert, wobei eine einfache Umschaltung der Hydrauliksteuerung von einem Eilgang im Arbeitszyklus des Tragarms zur Aufnahme einer erhöhten Traglast nicht vorgesehen ist.

Aus der DE 24 34 623 A1 geht des Weiteren ein Arbeitsgerät mit Hydraulikzylindern hervor, durch welche der Tragarm auf und ab bewegt wird. Die Ansteuerung der Hubzylinder ist derart vorgesehen, dass ein gleichmäßiger Hubkraftverlauf über die gesamte Hubbewegung eingeleitet wird, so dass eine Umschaltung zwischen einem Eilgang und einem Schwerlastgang, also einem Arbeitszyklus für Hebetraglasten, nicht vorgesehen ist.

Aus der DE 24 35 676 geht des Weiteren ein Arbeitsgerät hervor, bei welchem ein Arbeitszylinder für die auf und ab Bewegung eines Tragarmes vorgesehen ist und ein zweiter Arbeitszylinder lediglich als Energiespeicher verwendet wird, ohne dass dieser den ersten Hubzylinder für die Schwenkbewegung kraftmäßig unterstützt.

Aus der DE 2 342 942 ist des Weiteren ein Arbeitsgerät mit einer hydraulischen Ansteuerung eines Tragarmes bekannt. Über einen ersten Hubzylinder zwischen dem Oberwagen und dem Tragarm wird dieser auf und ab bewegt. Ein zweiter zwischen dem Oberwagen und dem Tragarm angeordneter Hubzylinder versorgt einen dritten Hubzylinder, der zwischen dem Tragarm und der Schaufel vorgesehen ist, um eine Gleichlaufbewegung der Schaufel zur Beibehaltung eines eingestellten Schaufelwinkels zu erzielen.

Aus der EP 2 146 009 A geht des Weiteren ein Arbeitsgerät hervor, bei welchem an einem Tragarm ein erstes Hauptzylinderpaar angreift und in einem abweichenden Angriffspunkt ein Zusatzzylinder befestigt ist. Das Hauptzylinderpaar und der dazwischen angeordnete Hubzylinder sind jeweils über getrennte Hydraulikschaltkreise miteinander verbunden. Der einzelne Hubzylinder zwischen dem Hauptzylinderpaar dient lediglich als Energiespeicher, das heißt, dass die auf und ab Bewegung des Tragarmes ausschließlich durch das Hauptzylinderpaar angesteuert wird. Dadurch kann eine Ansteuerung der Schwenkbewegung des Tragarms anwendungsspezifisch in einem Eilgang oder in einem Schwerlastgang nicht durchgeführt werden. US 2002 011013 offenbart ein Arbeitsgerät, das in einem Eilgang, in einem Arbeitsgang und in einem Schwerlastgang angesteuert werden kann.

Der Erfindung liegt die Aufgabe zugrunde, ein Verfahren zur Ansteuerung eines hydraulisch bewegbaren Arbeitselementes mit zumindest einem Hauptzylinder und zumindest einem Zusatzzylinder in einem Arbeitsgerät sowie ein Arbeitsgerät zum Handhaben von Lasten mit zumindest einem Hauptzylinder und zumindest einem Zusatzzylinder vorzuschlagen, so dass eine flexible Ansteuerung eines Arbeitselements in verschiedenen Arbeitsbereichen ermöglicht ist.

Diese Aufgabe wird erfindungsgemäß durch ein Verfahren zur Ansteuerung eines hydraulisch auf und ab bewegbaren Auslegers eines Arbeitsgerätes mit den Merkmalen des Anspruchs 1 gelöst. Weitere vorteilhafte Ausgestaltungen des Verfahrens sind in den weiteren darauf rückbezogenen Ansprüchen angegeben.

Bei dem erfindungsgemäßen Verfahren ist vorgesehen, dass zur Ansteuerung des Arbeitselementes zumindest ein Hauptzylinder und zumindest ein Zusatzzylinder vorgesehen sind, welche zwischen dem Grundkörper und dem Arbeitselement, insbesondere zwischen dem Oberwagen und dem Tragarm, angreifen, um eine Schwenkbewegung des Arbeitselementes zu erzeugen, wobei der Haupt- und Zusatzzylinder jeweils einen kolbenkammerseitigen Anschluss und einen kolbenstangenseitigen Anschluss aufweisen und über Druckleitungen einer hydraulischen Steuereinrichtung versorgt werden und zur Durchführung einer Schwenkbewegung des Arbeitselementes mit einem aus einem Tank mittels Pumpe mit Druck beaufschlagten Druckmedium versorgt werden und jeweils die kolbenkammerseitigen Anschlüsse oder kolbenstangenseitigen Anschlüsse des zumindest einen Hauptzylinders und des zumindest einen Zusatzzylinders als Druck beaufschlagte Anschlüsse angesteuert werden. Dabei wird in einem ersten Arbeitsdruckbereich die Schwenkbewegung im Eilgang angesteuert, in einem zweiten Arbeitsdruckbereich, der höher als der erste Arbeitsdruckbereich ist, die Schwenkbewegung in einem Arbeitsgang angesteuert wird und in einem dritten Arbeitsdruckbereich, der höher als der erste und der zweite Arbeitsdruckbereich ist, die Schwenkbewegung im Schwerlastgang angesteuert wird, wobei in Abhängigkeit des jeweiligen Arbeitsdruckes die Schwenkbewegung im Arbeitsmodus Eilgang, Arbeitsgang oder Schwerlastgang angesteuert oder in den Arbeitsmodus übergeführt wird. Durch dieses Verfahren wird ermöglicht, dass für jeden Belastungsfall des Arbeitselementes in einem Arbeitsraum ideale Arbeitsdrücke zur Erzeugung der Schwenkbewegung ermöglicht werden. Darüber hinaus kann eine optimale Anpassung an verschieden wirkende Kräfte in unterschiedlichen Lagen innerhalb eines Arbeitsbereiches berücksichtigt und eine Schwenkbewegung durchgeführt werden. Vorzugsweise findet eine quasi stufenlose Umschaltung zwischen den einzelnen Arbeitsdruckbereichen statt, so dass eine kontinuierliche Schwenkbewegung oder Arbeitsbewegung des Arbeitselementes durchgeführt werden kann.

Nach einer bevorzugten Ausgestaltung des Verfahrens ist vorgesehen, dass in dem ersten Arbeitsdruckbereich, bei dem die Schwenkbewegung im Eilgang angesteuert wird, das Druckmedium aus einem Tank des Arbeitsgerätes jeweils den druckbeaufschlagten Anschlüssen des zumindest einen Haupt- und Zusatzzylinders zugeführt wird und der nicht druckbeauschlagte Anschluss des jeweiligen Haupt- und Zusatzzylinders mit dem dazugehörigen druckbeaufschlagten Anschluss des jeweiligen Haupt- und Zusatzzylinders durch einen jeweiligen Kurzschlusskreislauf verbunden werden, so dass jeweils das aus dem Haupt- und Zusatzzylinder verdrängte Druckmedium über die nicht druckbeaufschlagten Anschlüsse abgeführt und in den druckbeaufschlagten Anschluss des selben Haupt- und Zusatzzylinders zugeführt werden. Diese Schaltungsanordnung im ersten Arbeitsdruckbereich weist den Vorteil auf, dass eine verkürzte Rückführung des aus dem Haupt- und Zusatzzylinder abgeführten Druckmediums ermöglicht wird. Dadurch kann ein schnelleres Befüllen der mit Druck beaufschlagten Kammer des Haupt- und Zusatzzylinders ermöglicht werden. Des Weiteren wird dadurch eine Verringerung des Reibungsverlustes in dem Leitungsventil erzielt. Dies hat zur Folge, dass eine höhere Arbeitsgeschwindigkeit im Eilgang angesteuert werden kann.

Nach einer weiteren bevorzugten Ausgestaltung des Verfahrens ist vorgesehen, dass in dem zweiten Arbeitsdruckbereich, der höher als der erste Arbeitsdruckbereich liegt, bei dem die Schwenkbewegung im Arbeitsgang angesteuert wird, der nicht druckbeaufschlagte Anschluss des Hauptzylinders mit einem Tank zum Zuführen des verdrängten Mediums verbunden wird und der Kurzschlusskreislauf zwischen dem nicht druckbeaufschlagten und druckbeaufschlagten Anschluss des Zusatzzylinders aufrechterhalten wird. Durch diese Ausgestaltung wird ermöglicht, dass der Eilgang in seiner Arbeitsgeschwindigkeit dem Grunde nach aufrechterhalten werden kann, so dass eine abnehmenden Druckdifferenz im Hauptzylinder zwischen dem druckbeaufschlagten und nicht druckbeaufschlagten Anschluss entgegengewirkt werden kann. Bei diesem Arbeitsgang wird der zumindest eine Zusatzzylinder bevorzugt ohne Kraftbeaufschlagung weitergeschleppt oder mit bewegt, da dessen Kurzschlusskreislauf aufrechterhalten bleibt und zum hinreichenden Befüllen der Druckkammer des Zusatzzylinders zusätzlich noch Druckmedium über eine Hydraulikleitung aus dem Tank in den Kurzschlusskreislauf zugeführt werden kann.

Eine weitere Ausgestaltung des Verfahrens sieht vor, dass in dem dritten Arbeitsdruckbereich, der höher als der erste und zweite Arbeitsdruckbereich ist, bei dem die Schwenkbewegung im Schwerlastgang angesteuert wird, die nicht druckbeaufschlagten Anschlüsse des zumindest einen Hauptzylinders und Zusatzzylinders mit dem Tank verbunden werden. Dadurch erfolgt eine maximale Druckbeaufschlagung des zumindest einen Haupt- und Zusatzzylinders mit einem erhöhten bis maximalen Arbeitsdruck der hydraulischen Steuereinrichtung.

Nach einer bevorzugten Ausgestaltung des Verfahrens ist vorgesehen, dass der Arbeitsdruck während der Schwenkbewegung des Arbeitselementes durch zumindest ein Steuerelement überwacht wird und zwischen dem ersten und zweiten Arbeitsdruck ein erster Arbeitsdruckwert und zwischen dem zweiten und dritten Arbeitsdruckbereich ein zweiter Arbeitsdruckwert voreingestellt wird und dass beim Überschreiten oder Unterschreiten des jeweiligen Arbeitsdruckwertes der entsprechende Arbeitsmodus des Arbeitsdruckbereiches angesteuert wird. Dadurch wird ermöglicht, dass beispielsweise während einer Schwenkbewegung des Arbeitselementes eine für den Eilgang auftretende Überlastung nicht zum Stillstand der Schwenkbewegung, sondern zur Fortführung der gewünschten Schwenkbewegung führt und ein Umschalten innerhalb der hydraulischen Steuerung erfolgt, so dass die Hauptzylinder die Schwenkbewegung weiterhin ansteuern. Durch diese Ansteuerung wird somit ermöglicht, dass eine Schwenkbewegung beispielsweise im Eilgang, im Arbeitsgang oder im Schwerlastgang begonnen werden kann und in Abhängigkeit der darauf folgenden Arbeitsdrücke eine entsprechende Umschaltung in den jeweiligen anderen Arbeitsmodus ermöglicht wird. Durch eine solche wahlweise Ansteuerung des Arbeitsmodus kann eine optimale Hubkraft während der Schwenkbewegung des Arbeitselementes erzeugt werden.

Nach einer weiteren bevorzugten Ausgestaltung des Verfahrens wird der zumindest eine Zusatzzylinder während einer Senkbewegung des Auslegers als Dämpfungszylinder angesteuert, der dem zumindest einen Hauptzylinder, der die Senkbewegung durchführt, entgegenwirkt. Dadurch kann ein zusätzliches kontrolliertes Absenken des Auslegers aus einem Nahbereich in einen weiter davon entfernten Arbeitsbereich in kontrollierter Weise ermöglicht werden. Zudem kann eine Dämpfung bei einer maximalen Ausladung des ersten Hauptzylinders oder des Hauptzylinderpaares erzielt werden.

Die Aufgabe wird des Weiteren erfindungsgemäß durch ein Arbeitsgerät mit einem hydraulisch auf und ab bewegbaren Ausleger gemäß den Merkmalen des Anspruchs 7 gelöst. In den weiteren Ansprüchen sind vorteilhafte Ausgestaltungen des Arbeitsgerätes angegeben.

Die erfindungsgemäße Ausgestaltung eines Arbeitsgerätes mit einem hydraulisch bewegbaren Arbeitselement, bei welchem zumindest ein Hauptzylinder und zumindest ein Zusatzzylinder schwenkbar an einem Grundkörper angeordnet sind, die gegenüberliegend an einem Arbeitselement angreifen, welche ebenfalls an dem Grundkörper schwenkbar angeordnet ist, die in Abhängigkeit des jeweiligen Arbeitsdruckes durch eine erste, zweite und dritte Schaltungsanordnung durch zumindest ein Steuerelement in Abhängigkeit des anstehenden Arbeitsdruckes ansteuerbar ist, wird eine beanspruchungsangepasste Ansteuerung des Arbeitselementes in einem Arbeitsbereich für eine Auf-und Ab- oder Hin- und Herbewegung ermöglicht.

Eine erste bevorzugte Schaltungsanordnung zur Ansteuerung der Schwenkbewegung im Eilgang sieht vor, dass der nicht druckbeaufschlagte Anschluss des zumindest einen Hauptzylinders und des zumindest einen Zusatzzylinders zum Rückführen des verdrängten Mediums während der Arbeitsbewegung mit den jeweiligen druckbeaufschlagten Anschluss desselben Haupt- und Zusatzzylinders verbindbar ist, so dass ein erster Kurzschlusskreislauf für den oder die Hauptzylinder und ein zweiter Kurzschlusskreislauf für den oder die Zusatzzylinder ausgebildet ist. Der Kurzschlusskreislauf des zumindest einen Hauptzylinders ist getrennt vom Kurzschlusskreislauf des zumindest einen Zusatzzylinders ausgebildet. Durch die Kurzschlusskreisläufe wird ermöglicht, dass das verdrängte Druckmedium während der Arbeitsbewegung des jeweiligen Hydraulikzylinders in einer ersten Arbeitsphase des Eilgangs wieder in denselben zurückgeführt wird, um ein schnelleres Füllen der jeweiligen Druckkammer zu bewirken, so dass ein Eilgang mit einer hohen Arbeitsgeschwindigkeit ansteuerbar ist.

Bevorzugt ist vorgesehen, dass durch eine Zuführleitung zusätzliches Druckmedium den jeweiligen Kurzschlusskreisläufen im Eilgang in zumindest einer ersten Arbeitsphase zuführbar ist. Dadurch werden die Druckkammern des Haupt- und Zusatzzylinders einerseits durch zugeführtes Druckmedium aus dem Tank und ergänzend durch abgeführtes Druckmedium aus dem jeweils eigenen Hydraulikzylinder versorgt und befüllt.

Des Weiteren ist bevorzugt eine zweite Schaltungsanordnung der hydraulischen Steuerungsvorrichtung vorgesehen, bei der ein Arbeitsgang ansteuerbar ist. Dabei ist vorgesehen, dass der nicht druckbeaufschlagte Anschluss und der druckbeaufschlagte Anschluss des zumindest einen Zusatzzylinders im Kurzschluss geschalten ist, so dass ein Kurzschlusskreislauf für den Zusatzzylinder ausgebildet ist. Für den zumindest einen Hauptzylinder ist vorgesehen, dass der jeweilige druckbeaufschlagte Anschluss mit Druckmedium aus dem Tank versorgt wird und der nicht druckbeaufschlagte Anschluss das verdrängte Druckmedium in den Tank zurückführt. Durch diese zweite Schaltungsanordnung wird eine Arbeitsweise ermöglicht, bei der der zumindest eine Hauptzylinder mit einem Arbeitsdruck beaufschlagbar ist und der zumindest eine Zusatzzylinder quasi kraftlos mitgeschleppt wird. Ergänzend kann insbesondere bei einer Ausfahrbewegung eine erfolgende Unterversorgung der Füllmenge in der Druckkammer des Zusatzzylinders durch die zum Kurzschlusskreislauf führende Zuführleitung ausgeglichen werden, welche den zumindest einen Hauptzylinder mit Druckmedium versorgt.

Des Weiteren ist bevorzugt vorgesehen, dass durch eine dritte Schaltungsanordnung ein Schwerlastgang ansteuerbar ist. Bei dieser Schaltungsanordnung sind sowohl die druckkammerseitigen Anschlüsse des zumindest einen Hauptzylinders und des zumindest einen Zusatzzylinders als auch die jeweiligen nicht druckbeaufschlagten Anschlüsse des zumindest einen Hauptzylinders und Zusatzzylinders mit dem Tank verbunden.

Eine bevorzugte Ausgestaltung der Erfindung sieht vor, dass der zumindest eine Zusatzzylinder bei einer Hebebewegung des Arbeitselementes im Nahbereich des Arbeitsbereiches einen größeren Hebelarm zum Tragarm aufweist als der Hauptzylinder oder das Hauptzylinderpaar. Dadurch wird gerade im Nahbereich eine erhöhte Traglast ermöglicht, das heißt, dass eine höhere Last angehoben und gehandhabt oder aufgebracht werden kann. Beispielsweise können herkömmliche Arbeitsgeräte auch zum Heben von schweren Lasten im Nahbereich eingesetzt und umgerüstet werden. Dies beruht insbesondere darauf, da am Ausleger zumeist über ein Wechselsystem unterschiedliche Anbaugeräte angeordnet sein können, so dass beispielsweise ein Arbeitsgerät einen Greifer oder Lasthaken als auch eine Schrottschere oder dergleichen aufnehmen kann und somit einen größeren Anwendungsbereich und die größere Auslastung umfasst.

Nach einer weiteren bevorzugten Ausgestaltung der Erfindung weisen der Hauptzylinder oder das Hauptzylinderpaar einen Angriffspunkt am Arbeitselement auf, der abweichend zum Angriffspunkt des zumindest einen Zusatzzylinders ausgebildet ist, wobei insbesondere ein abweichender Abstand zur Lagerachse des Arbeitselement am Grundkörper vorgesehen ist. Dadurch lassen sich in einfacher Weise unterschiedliche Hebelarme gestalten, wobei gleichzeitig eine gute Anpassung an die konstruktiven Besonderheiten eines jeden Auslegers berücksichtigt werden kann. Insbesondere ist der Abstand des zumindest einen Zusatzzylinders zur Lagerachse des Arbeitselements am Grundkörper größer als der Abstand des Angriffspunktes vom ersten Hubzylinder oder Hauptzylinderpaar zur Lagerachse des Arbeitselements am Grundkörper.

Eine weitere bevorzugte Ausgestaltung der Erfindung sieht vor, dass zur Aufnahme einer erhöhten Traglast im Nahbereich des Arbeitsraumes der zumindest eine Zusatzzylinder in einem Angriffswinkel angreift, der von dem des ersten Hubzylinders oder Hauptzylinderpaars abweicht. Dadurch kann insbesondere bei einer Hebebewegung im Nahbereich der zumindest eine Zusatzzylinder einen größeren Hebelarm als der Hauptzylinder oder das Hauptzylinderpaar aufweisen, um die zusätzliche Druckkraft zur Erhöhung der Traglast aufzubringen.

Nach einer alternativen Ausgestaltung der Erfindung ist eine Längsachse des zumindest einen Zusatzzylinders parallel zur Längsachse des ersten Hubzylinders oder Hauptzylinderpaars ausgestattet. Durch die voneinander abweichenden Angriffspunkte kann dadurch ebenfalls wieder ein vergrößerter Hebelarm geschaffen werden.

Eine bevorzugte Ausgestaltung des Arbeitsgerätes sieht vor, dass das Arbeitselement als Tragarm ausgebildet ist und der Tragarm eines Auslegers mehrteilig aus einem Tragarmstummel und zumindest einem Tragarmabschnitt ausgebildet ist und eine Wechseleinrichtung zur austauschbaren Aufnahme des Tragarmabschnittes aufweist und dass der zumindest eine Zusatzzylinder am Tragarmstummel des Auslegers angreift. Diese Anordnung ermöglicht eine Vereinfachung der Schnittstelle an der Wechseleinrichtung, da die Hydrauliksteuerung ein Ventil aufweist, welches zumindest einen Zusatzzylinder bedarfsmäßig zuschaltet.

Eine alternative Ausgestaltung des Arbeitsgerätes sieht vor, dass der Tragarm des Auslegers mehrteilig ausgebildet ist und eine Wechseleinrichtung aufweist, an der ein Tragarmabschnitt anordenbar ist und dass der zumindest eine Zusatzzylinder am Tragarmabschnitt angreift. Diese Anordnung weist den Vorteil auf, dass herkömmliche Arbeitsgeräte, bei welchen die meisten Anwendungsbereiche durch den ersten Hubzylinder oder das Hauptzylinderpaar zur Auf-und-Ab-Bewegung des Auslegers abgedeckt sind, kostengünstig ausgebildet sein können und nur bedarfsmäßig beim Heben und Senken von erhöhten Lasten mittels eines Tragarmabschnittes der zumindest eine Zusatzzylinder zugeschalten und in die Hydrauliksteuerung eingebunden wird. Bevorzugt ist dabei ein weiteres Steuerventil vorgesehen, um weiteren Hydraulikzylinder anzusteuern.

Nach einer weiteren bevorzugten Ausgestaltung der Erfindung bleibt der an dem Tragarmabschnitt angeordnete zumindest eine Zusatzzylinder beim Wechseln des Tragarmabschnittes mit diesem verbunden. Dies weist zum einen den Vorteil auf, dass ein einfacher Rückbau des Arbeitsgerätes zu einem ein- oder zweizylindrigen Antrieb ermöglicht ist. Zum anderen ist der Hubzylinder bevorzugt derart an dem Tragarmabschnitt angeordnet, dass eine Hydraulikleitung unmittelbar in den Kolbenraum des Hubzylinders mündet und in der Wechseleinrichtung ein Ventil entsprechend geöffnet oder geschlossen wird, wodurch die Montage vereinfacht ist. Gleichzeitig kann dieser Zusatzzylinder als Abstützung in einem Aufnahmebereich oder Lagebereich für den Tragabschnitt dienen, um die Wechseleinrichtung in einer geeigneten Angriffshöhe zu positionieren.

Eine weitere bevorzugte Ausgestaltung der Erfindung sieht vor, dass bei einem mehrteiligen Ausleger, bei dem der zumindest eine Zusatzzylinder an einem zum Tragarmstummel auswechselbaren Tragarmabschnitt befestigt ist, über ein weiteres Ventil angesteuert wird. Beispielsweise kann der Tragarmstummel mit einem ersten Hubzylinder oder einem Hauptzylinderpaar einen Tragarmabschnitt mit einem daran angeordneten Löffel aufnehmen, wodurch das Arbeitsgerät als herkömmlicher Bagger einsetzbar ist. Sofern jedoch dieser Bagger als Lastkran oder dergleichen eingesetzt werden soll, kann aufgrund des mehrteiligen Auslegers an dem Tragstummel oder dem Tragarmabschnitt ein Zusatzzylinder befestigt werden, so dass insbesondere im Nahbereich erhöhte Lasten aufgenommen werden können. Zur Ansteuerung des zumindest einen Zusatzzylinders ist dabei ein weiteres Ventil vorgesehen, welches der Hydrauliksteuerung zugeschalten wird, sobald der zumindest eine Zusatzzylinder über den Tragarmabschnitt zum Tragarmstummel angeschlossen ist.

Eine weitere bevorzugte Ausgestaltung der Erfindung sieht vor, dass der zumindest eine Zusatzzylinder benachbart zu einem ersten Hubzylinder oder zwischen einem Hauptzylinderpaar angeordnet ist. Dadurch können die beispielsweise am Tragarm angreifenden Hubzylinder alle auf derselben Seite oder demselben Bereich des Tragarmes positioniert sein.

Eine alternative Ausgestaltung des Arbeitsgerätes sieht vor, dass der zumindest eine Zusatzzylinder als Nackenzylinder zwischen dem aus Oberwagen ausgebildeten Grundkörper und dem als Tragarm ausgebildeten Arbeitselement ausgebildet ist. Eine solche Anordnung ist zumeist dann vorgesehen, wenn ein Bereich zwischen dem Hauptzylinderpaar zu eng wird, um darin einen Zusatzzylinder vorzusehen. Somit wird dieser rückwärtig angeordnet.

Nach einer weiteren bevorzugten Ausgestaltung der Erfindung ist vorgesehen, dass bei einem mehrteiligen Ausleger mit zumindest zwei schwenkbar zueinander gelagerten Tragarmen zumindest ein Zusatzzylinder zwischen den beiden schwenkbar zueinander angeordneten Tragarmen angeordnet ist, wobei der zumindest eine Zusatzzylinder einen abweichenden Hebelarm von dem einen ersten Hubzylinder oder Hauptzylinderpaar zwischen den beiden Tragarmen aufweist. Diese vorbeschriebenen Ausführungsformen können in Analogie auch bei dem mehrteiligen Ausleger ausgebildet sein. Somit können sehr weit auslegende und mehrteilige Ausleger auch im Nahbereich eine hohe Traglast aufweisen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:

Figuren 1a und b schematische Seitenansichten eines Arbeitsgerätes,

Figur 2a bis f schematische Schnittdarstellungen einer hydraulischen Steuerungseinrichtung des Arbeitsgerätes in verschiedenen Schaltungsanordnungen,

Figur 3 eine schematische Seitenansicht eines alternativen Arbeitsgerätes zu Figur 1a und 1b,

Figuren 4a und b schematische Seitenansichten einer weiteren alternativen Ausführungsform zu Figur 1a und 1b,

Figur 5 eine schematische Seitenansicht einer alternativen Ausführungsform zu Figur 4a und 4b,

Figuren 6a und b schematische Seitenansichten einer weiteren alternativen Ausführungsform zu Figur 4a und 4b und

Figur 7 eine schematische Seitenansicht einer weiteren alternativen Ausführungsform zu Figur 6a und 6b.

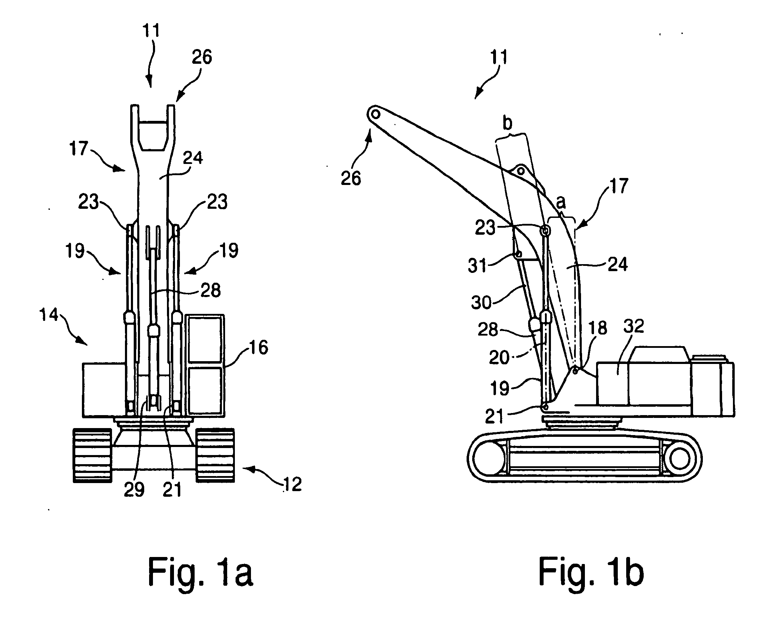

In den Figuren 1a und b sind schematische Seitenansichten eines erfindungsgemäßen Arbeitsgerätes 11 dargestellt. Bei einem solchen Arbeitsgerät 11 kann es sich beispielsweise um einen Bagger handeln, der in den Figuren 1a und b dargestellt ist. Alternativ kann es sich bei solchen Arbeitsgeräten 11 auch um sogenannte Schrottscheren handeln, welche eine schwenkbare und eine feststehende Backe oder zwei zueinander schwenkbare Backen aufweisen. Dieses als Bagger ausgebildete Arbeitsgerät 11 weist einen Unterwagen 12 auf, der über eine Kette verfahrbar ist. Alternativ können Laufräder beziehungsweise Reifen vorgesehen sein. Auf dem Unterwagen 12 ist drehbar ein Grundkörper 14 vorgesehen der im Folgenden aufgrund des gewählten Ausführungsbeispiels als Oberwagen 14 bezeichnet wird, an dem eine Führerkabine 16 angeordnet ist, welche nur in Figur 1a dargestellt ist. An dem Oberwagen 14 ist ein Ausleger 17 um eine Lagerachse 18 schwenkbar beziehungsweise auf und ab bewegbar angeordnet. Für die Hebe- und Senkbewegung im Arbeitsraum des Auslegers 17 ist ein Hauptzylinderpaar aus zwei Hauptzylindern 19 vorgesehen, welche über eine Lagerachse 21 am Oberwagen 14 schwenkbar gelagert sind und gegenüberliegend in einem Angriffspunkt 23 an einem Arbeitselement 24 angreifen. Das im Folgenden aufgrund des gewählten Ausführungsbeispiels als Tragarm 24 des Auslegers 17 bezeichnet wird. Alternativ kann anstelle von zwei Hauptzylindern 19, welche in derselben Lagerachse 21 und an denselben Angriffspunkten 23 links und rechts des Tragarmes 24 am Ausleger 17 angreifen, auch nur ein Hauptzylinder 19 vorgesehen sein.

Bei diesem Arbeitsgerät 11 besteht der Ausleger 17 aus einem einzigen, beispielsweise starren Tragarm 24, der an seinem vorderen freien Ende vorzugsweise eine Aufnahme 26 aufweist, an der verschiedene Stielausführungen angebracht werden können. Alternativ kann der Ausleger 17 auch mehrere gelenkig miteinander verbundene Tragarme 24 aufweisen.

Zur Erhöhung einer Traglast im Nahbereich des Arbeitsraumes des Arbeitsgerätes 11 ist zumindest ein Zusatzzylinder 28 vorgesehen, der sich über eine Lagerachse 29 am Oberwagen 14 abstützt und in einem Angriffspunkt 31 am Tragarm 24 befestigt ist. Dieser Angriffspunkt 31 des Zusatzzylinders 28 weicht beispielsweise vom Angriffspunkt 23 des ersten Hubzylinders oder Hauptzylinderpaars 19 ab, so dass insbesondere in einer Arbeitsposition im Nahbereich des Auslegers 17 der Zusatzzylinder 28 einen größeren Hebelarm als der Hauptzylinder 19 oder das Hauptzylinderpaar aufweist. Dies wird bei der Anordnung gemäß Figur 1 insoweit offensichtlich, da in einer obersten Position des Auslegers 17 der Hauptzylinder 19 vollständig ausgefahren ist und vertikal nach oben steht und somit der Hebelarm a kleiner als der Hebelarm b des zumindest einen Zusatzzylinders 28 ist. Dadurch wird insbesondere bei einer Hebebewegung im Nahbereich eine zusätzliche Kraft über den Zusatzzylinder 28 zur Erhöhung der Traglast eingeleitet. Bei dieser Ausführungsform ist vorgesehen, dass die Haupt- oder Zusatzzylinder 19, 28 derart ausgerichtet sind, dass die Kolbenstangen an den Angriffspunkten 23, 31 am Ausleger 17 angreifen.

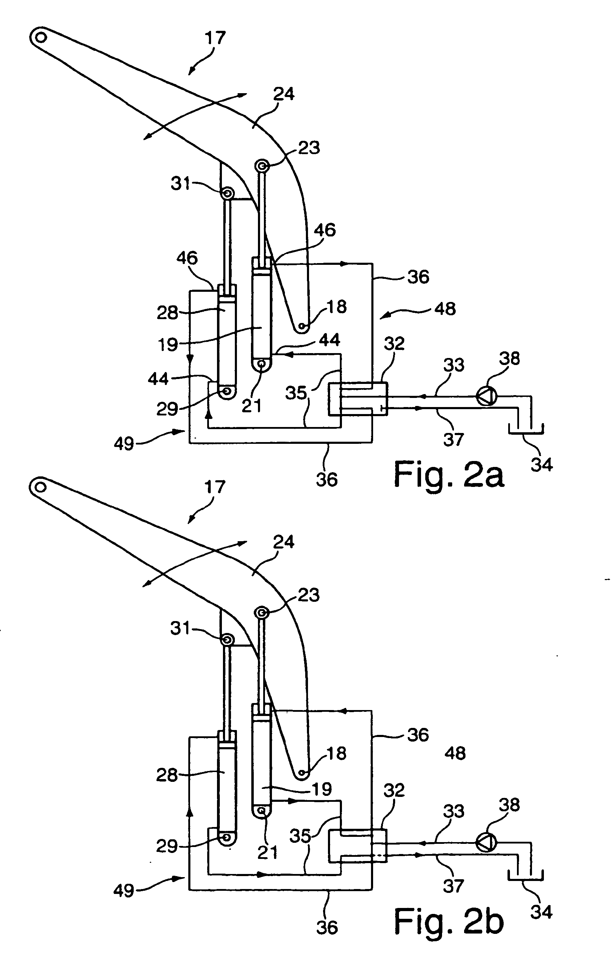

In Figur 2a ist schematisch ein Hydraulikplan einer hydraulischen Steuerungseinrichtung 32 des Arbeitsgerätes 11 zur Ansteuerung der Hubzylinder 19, 28 dargestellt. Über eine Pumpe 38 wird das Druckmedium von einem Tank 34 über einen Zulauf 33 der hydraulischen Steuerungseinrichtung 32 zugeführt. Aus der hydraulischen Steuerungseinrichtung 32 abzuführendes Druckmedium wird über den Ablauf 37 in den Tank 34 zurückgeführt. Die hydraulische Steuerungseinrichtung 32 umfasst hydraulische Leitungen 35, 36, die beispielsweise über Ventile in Abhängigkeit der jeweiligen Arbeitsweisen für unterschiedliche Schaltungsanordnungen miteinander verbindbar sind, wie dies nachfolgend im Einzelnen ausgeführt ist.

Der Hauptzylinder 19 als auch der Zusatzzylinder 28 sind als doppelt wirkende Hubkolbenzylinder ausgebildet. Diese weisen jeweils einen kolbenkammerseitigen Anschluss 44 und einen kolbenstangenseitigen Anschluss 46 auf. Über eine Hydraulikleitung 35 wird der kolbenkammerseitige Anschluss 44 ausgehend von der Steuerungseinrichtung 32 versorgt. Der kolbenstangenseitige Anschluss 46 steht mit der Hydraulikleitung 36 mit der Steuerungseinrichtung 32 in Verbindung. In Abhängigkeit der Ansteuerung des Haupt- und Zusatzzylinders 19, 28 kann der kolbenkammerseitige Anschluss 44 als druckbeaufschlagter Anschluss wirken und der kolbenstangenseitige Anschluss 46 als nicht druckbeaufschlagter Anschluss wirken. In einem solchen Fall fährt die Hubstange des jeweiligen Haupt- und Zusatzzylinders 19, 28 aus. Ebenso kann auch eine Vertauschung vorgesehen sein, das heißt, dass die kolbenstangenseitigen Anschlüsse 46 des Haupt- und Zusatzzylinders 19, 28 druckbeaufschlagte Anschlüsse sind und die kolbenkammerseitigen Anschlüsse 44, die nicht druckbeaufschlagte Anschlüsse bilden. In einem solchen Fall verfahren die Hubstangen in ein Zylindergehäuse des jeweiligen Haupt -und Zusatzzylinders 19, 28 ein.

Zum auf und ab Bewegen beziehungsweise zum Schwenken eines Arbeitselementes, insbesondere eines Tragarmes 24, kann über die hydraulische Steuerungseinrichtung 32 die wahlweise Ansteuerung eines Eilganges eines Arbeitsganges und eines Schwerlastganges erfolgen.

In Figur 2a ist eine erste Schaltungsanordnung der Steuerungseinrichtung 32 für einen ersten Arbeitsdruckbereich dargestellt, welche das Anheben des Tragarmes 24 im Eilgang ansteuert. Figur 2b zeigt eine Absenkbewegung im Eilgang.

Bei dieser ersten Schaltungsanordnung ist vorgesehen, dass Druckmedium über den Zulauf 33 zugeführt wird und jeweils die kolbenkammerseitigen Anschlüsse 44 als druckbeaufschlagte Anschlüsse angesteuert werden. Das während der Ausfahrbewegung des Haupt- und Zusatzzylinders 19, 28 kolbenstangenseitig verdrängte Druckmedium wird über die Anschlüsse 46 als nicht druckbeaufschlagte Anschlüsse abgeführt. Über die Leitung 36 wird das verdrängte Druckmedium wieder zur Steuerungsanordnung 32 zurückgeführt, wobei die Leitung 36 jeweils mit den Leitungen 35 kurzgeschlossen ist, so dass für den Hauptzylinder 19 ein Kurzschlusskreislauf 48 und getrennt davon für den Zusatzzylinder 28 ein Kurzschlusskreislauf 49 gebildet ist, wodurch das verdrängte Druckmedium unmittelbar wieder kolbenkammerseitig zugeführt wird. Ergänzend kann über die Leitung 33 dem jeweiligen Kurzschlusskreislauf 48,49 Druckmedium zugeführt. Dadurch kann der Eilgang im ersten Arbeitsdruckbereich angesteuert werden und der zumindest eine Hauptzylinder 19 und zumindest eine Zusatzzylinder 28 mit einer hohen Verfahrgeschwindigkeit bewegt werden. Durch die Kurzschlussschaltung 48, 49 wird eine schnelle Befüllung an der druckbeaufschlagten Seite des zumindest einen Haupt- und Zusatzzylinders 19, 28 ermöglicht. Gleichzeitig entstehen geringe Reibungsverluste in den Leitungen 35, 36.

Die Senk- beziehungsweise Schwenkbewegung nach unten erfolgt analog, wobei die kolbenstangenseitigen Anschlüsse 46 nunmehr die druckbeaufschlagten Anschlüsse sind, wie dies in Figur 2b dargestellt ist. Beim Aufwärtsbewegen gemäß der Figur 2a ist vorgesehen, dass der Abfluss 37 zum Tank 34 gesperrt ist. Bei der Abwärtsbewegung gemäß Figur 2b ist der Abfluss 37 insoweit mit dem Tank 34 verbunden, damit überschüssiges Druckmedium beim Durchführen in die kolbenstangenseitige Druckkammer abgeführt wird.

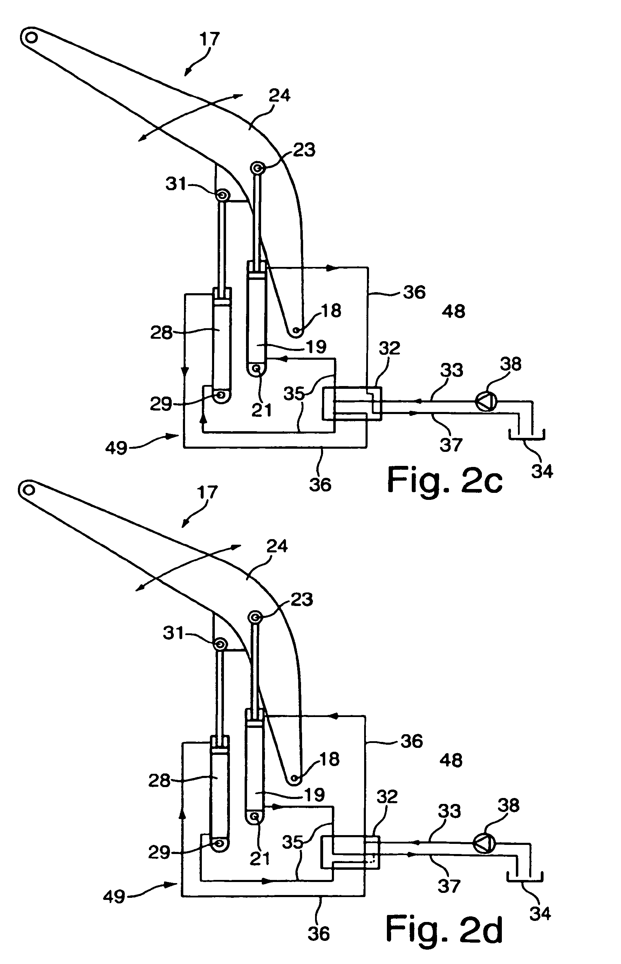

In den Figuren 2c und d ist eine zweite Schaltungsanordnung der hydraulischen Steuerungseinrichtung 32 zur Ansteuerung des zumindest einen Hauptzylinders und zumindest einen Zusatzzylinders 19, 28 im Arbeitsgang dargestellt. Eine solche zweite Schaltungsanordnung wird durch die hydraulische Steuerungseinrichtung eingenommen, sobald ein zweiter Arbeitsdruckbereich durch zumindest ein Steuerungselement erfasst wird. Bei einem solchen Steuerungselement kann es sich um einen Drucksensor handeln, der bekannterweise in den hydraulischen Verbindungsleitungen 35, 36 angeordnet ist. Der zweite Arbeitsdruckbereich ist höher als der erste Arbeitsdruckbereich, bzw. der zweite Arbeitsbereich liegt oberhalb des ersten Arbeitsbereiches.

Die zweite Schaltungsanordnung für den zweiten Arbeitsdruckbereich ist derart vorgesehen, dass für den zumindest einen Zusatzzylinder 28 der Kurzschlusskreislauf 49 angesteuert wird, wohingegen die Anschlüsse des zumindest einen Hauptzylinders 19 mit dem Tank 34 verbunden werden. Bei dieser zweiten Schaltungsanordnung wird der zumindest eine Hauptzylinder 19 mit einem Arbeitsdruck zur Durchführung der Schwenkbewegung beaufschlagt, wohingegen der zumindest eine Zusatzzylinder 28 kraftlos mitgeschleppt wird.

Die Figur 2c zeigt beispielsweise eine Ausfahrbewegung oder Aufwärtsbewegung eines Tragarmes 24. Die Figur 2d zeigt die Abwärtsbewegung.

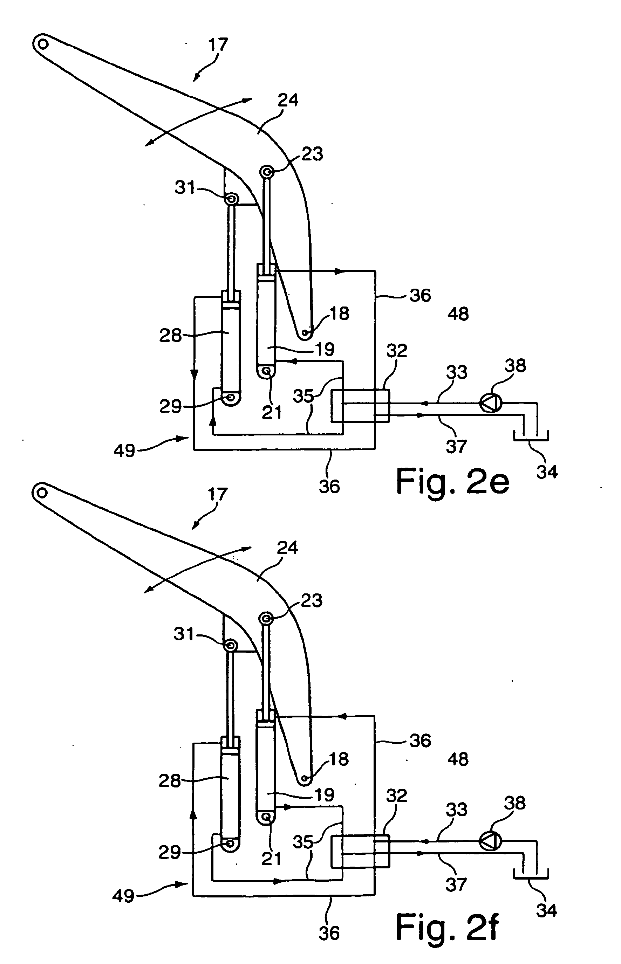

In den Figuren 2e und f ist eine dritte Schaltungsanordnung dargestellt, welche bei der Ermittlung eines dritten Arbeitsdruckbereiches durch das zumindest eine Steuerungselement eingenommen wird. Der dritte Arbeitsbereich umfasst einen Arbeitsdruck, der höher als der herrschende Arbeitsdruck des ersten und des zweiten Arbeitsdruckbereiches liegt. Bei dieser Schaltungsanordnung ist vorgesehen, dass sowohl die Anschlüsse 44, 46 des zumindest einen Hauptzylinders 19 als auch die Anschlüsse 44, 46 des zumindest einen Zusatzzylinders 28 mit dem Tank 34 verbunden sind, so dass jeder druckbeaufschlagte Anschluss 44 unmittelbar über den Zulauf 33 mit Druckmedium aus dem Tank 34 versorgt wird. Bei dieser dritten Schaltungsanordnung wird das Arbeitselement, insbesondere der Tragarm 24, im Schwerlastgang bewegt.

Die Figur 2e zeigt die dritte Schaltungsanordnung im Schwerlastgang für eine Aufwärtsbewegung und die Figur 2f zeigt die dritte Schaltungsanordnung im Schwerlastgang für eine Abwärtsbewegung.

Sobald während einer Schwenkbewegung innerhalb des Arbeitsbereiches der erste voreinstellbare Arbeitsdruck oder der zweite voreinstellbare Arbeitsdruck überschritten oder unterschritten wird, wechselt die hydraulische Steuerungsvorrichtung 32 auf die entsprechende erste, zweite oder dritte Schaltungsanordnung, so dass jeweils innerhalb des Schwenkbereiches eine optimale Ansteuerung des Arbeitselementes 24 ermöglicht wird.

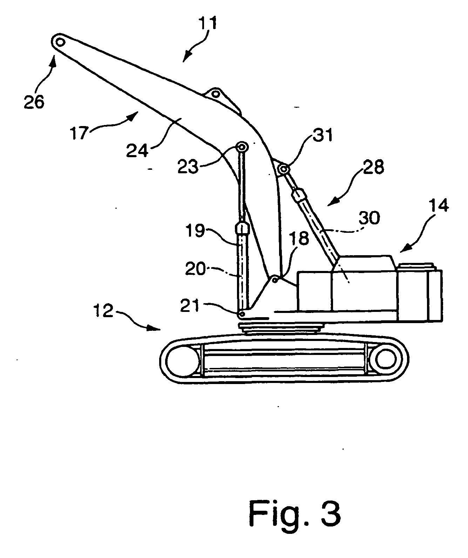

In Figur 3 ist eine schematische Seitenansicht einer alternativen Ausführungsform des Arbeitsgerätes 11 gemäß den Figuren 1a und b dargestellt. Der zumindest eine Zusatzzylinder 28 ist als sogenannter Nackenzylinder ausgebildet und liegt auf einer gegenüberliegenden Seite des Auslegers 17, als dies in den Figuren 1a und b der Fall ist.

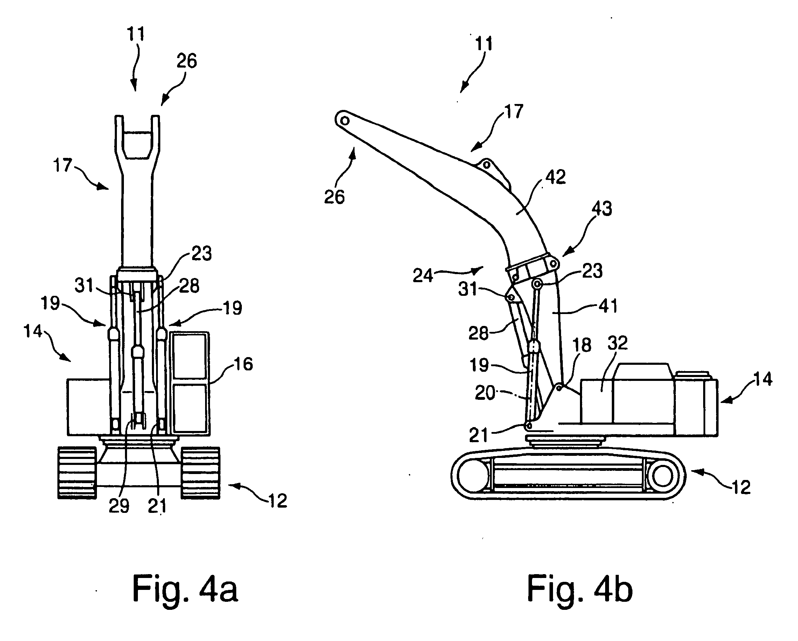

In den Figuren 4a und b ist eine weitere alternative Ausführungsform des Anbaugerätes 11 in den Figuren 1a und b dargestellt. Bei dieser Ausführungsform ist abweichend ein mehrteiliger Ausleger 17 vorgesehen. Dieser Ausleger 17 ist beispielhaft zweiteilig ausgebildet und umfasst einen Tragarmstummel 41 und einen Tragarmabschnitt 42, die über einen Wechseleinrichtung 43 auswechselbar aneinander verbunden sind. Bei dieser Ausführungsform ist vorgesehen, dass der Hauptzylinder 19 beziehungsweise das Hauptzylinderpaar als auch der zumindest eine Zusatzzylinder 28 an dem Tragarmstummel 41 angreifen, so dass diese Ausführungsform vollständig der Ausführungsform gemäß den Figuren 1a und b gleicht mit Ausnahme des mehrteiligen Auslegers 17, so dass hierauf Bezug genommen werden kann. Bei dieser Ausführungsform ist beispielsweise vorgesehen, dass die Kolbenstangen gemäß Figur 4a gleich ausgerichtet und gemäß Figur 4b beispielhaft gegenläufig ausgerichtet sind, das heißt, dass bei Figur 4b die Kolbenstangen der Hubzylinder 19 am Angriffspunkt 23 angreifen, wohingegen die Kolbenstange des Hubzylinders 28 in der Lagerachse 29 angreift. Alternativ kann diese Anordnung auch vertauscht sein.

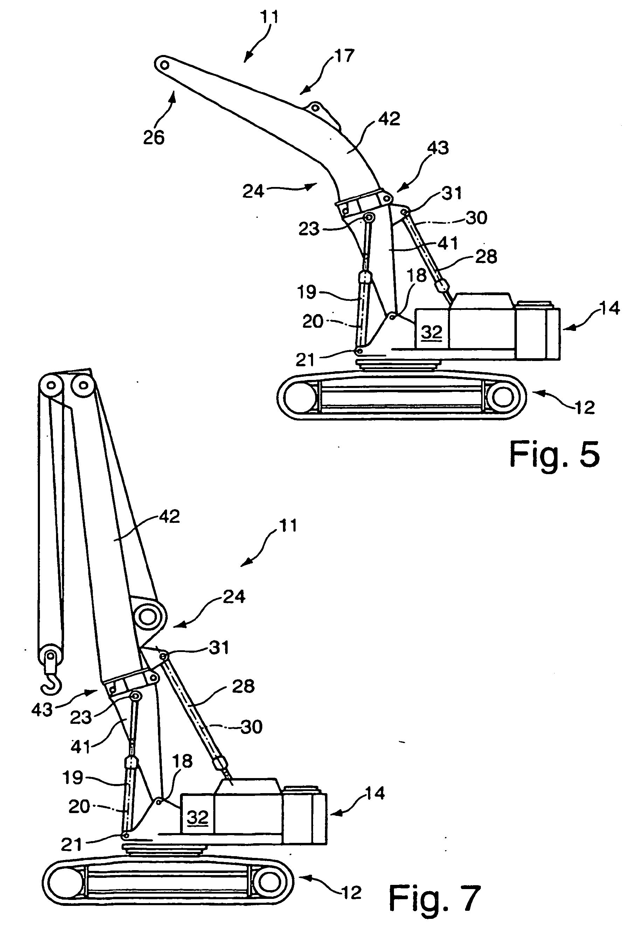

In Figur 5 ist eine schematische Seitenansicht einer alternativen Ausführungsform zu den Figuren 4a und b dargestellt. Diese Alternative entspricht in Analogie der alternativen Ausführungsform in Figur 3 zu den Figuren 1 a und 1 b. Der zumindest eine Zusatzzylinder 28 ist als Nackenzylinder ausgebildet und greift am Tragarmstummel 41 an.

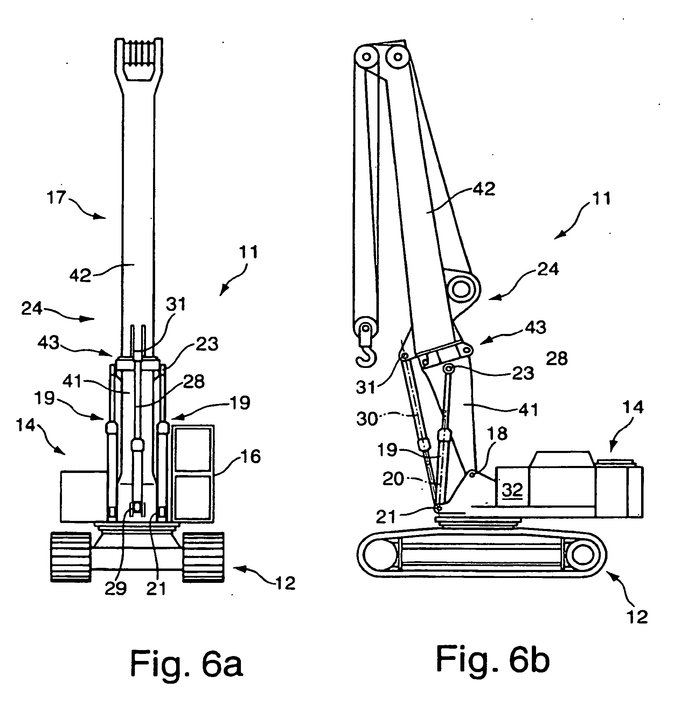

In den Figuren 6a und b ist eine weitere alternative Ausführungsform zu den Figuren 4a und b dargestellt. Diese Ausführungsform weicht zu den Figuren 4a und b dahingehend ab, dass der zumindest eine Zusatzzylinder 28 nicht an dem Tragarmstummel 41, sondern an dem Tragarmabschnitt 42 angreift. Der Tragarmabschnitt 42 ist bei diesem Ausführungsbeispiel als Lastkran mit einem Lasthaken an einem Flaschenzug ausgebildet. Eine solche Ausführungsform kann beispielsweise zum Verlegen von Öl- oder Wasserleitungen eingesetzt werden. Da das Einsetzen der Leitungsabschnitte in Gräben nur einen Teil der Arbeitszeit eines solchen Arbeitsgerätes 11 in Anspruch nimmt, wird dieses umgerüstet, so dass beispielsweise ein Tragarmabschnitt 42 gemäß den Figuren 4a, b und 5 aufgenommen wird, damit dieses Arbeitsgerät 11 anschließend als Bagger oder dergleichen zum Ausheben der Gruben eingesetzt werden kann.

Diese Ausführungsform gemäß den Figuren 6a und b ist derart ausgebildet, dass beim Auswechseln des Tragarmabschnittes 42 die am Oberwagen 11 angreifende Lagerachse 29 des Zusatzzylinders 28 gelöst wird, so dass der Hubzylinder 28 an seinem Angriffspunkt 31 mit dem Tragarmabschnitt 42 verbunden bleibt. Dieser Hubzylinder 28 kann beim Ablegen des Tragarmabschnittes 42 als Stütze dienen. Bei dieser Ausführungsform ist bevorzugt ein separates Ventil insbesondere in der Wechseleinrichtung 43 vorgesehen, welches gleichzeitig mit dem An- und Abbau des Tragarmabschnittes 42 zu- und abschaltbar ist.

In Figur 7 ist eine alternative Ausführungsform zu den Figuren 6a und b dargestellt. Anstelle des Hubzylinders 28 zwischen den Hubzylindern 19 ist der Zusatzzylinder 28 als Nackenzylinder ausgebildet und greift ebenfalls wiederum an dem Tragarmabschnitt 42 an.

## Patentansprüche

1. Verfahren zur Ansteuerung eines hydraulisch bewegbaren Arbeitselementes (24), welches an einem Grundkörper (14) eines Arbeitsgerätes (11) vorgesehen ist, mit zumindest einem Hauptzylinder (19) und zumindest einem Zusatzzylinder (28), die an dem Grundkörper (14) schwenkbar gelagert sind und an dem Arbeitselement (24) angreifen, durch welche das Arbeitselement (24) in einem Arbeitsbereich auf und ab bewegbar angesteuert wird, wobei der Haupt- und Zusatzzylinder (19, 28) jeweils einen kolbenkammerseitigen Anschluss (44) und einen kolbenstangenseitigen Anschluss (46) aufweisen und über Druckleitungen (35, 36) einer hydraulischen Steuerungseinrichtung (32) versorgt werden und zur Durchführung einer Schwenkbewegung des Arbeitselementes (24) mit einem aus einem Tank (34) mittels Pumpe (38) mit Druck beaufschlagten Druckmedium versorgt und jeweils die kolbenkammerseitigen Anschlüsse (44) oder kolbenstangenseitigen Anschlüsse (46) des zumindest einen Hauptzylinders (19) und des zumindest einen Zusatzzylinders (28) als druckbeaufschlagte Anschlüsse angesteuert werden, wobei
- in einem ersten Arbeitsdruckbereich der hydraulischen Steuerungseinrichtung (32) die Schwenkbewegung im Eilgang angesteuert wird,
- in einem zweiten Arbeitsdruckbereich, der höher als der erste Arbeitsdruckbereich ist, die Schwenkbewegung in einem Arbeitsgang angesteuert wird,
- in einem dritten Arbeitsdruckbereich, der höher als der erste und der zweite Arbeitsdruckbereich ist, die Schwenkbewegung im Schwerlastgang angesteuert wird und
- in Abhängigkeit des anstehenden Arbeitsdruckes die Schwenkbewegung des Arbeitselementes (24) im Arbeitsmodus Eilgang, Arbeitsgang oder Schwerlastgang angesteuert wird,
**dadurch gekennzeichnet,**
- **dass** in dem ersten Arbeitsdruckbereich, in dem die Schwenkbewegung im Eilgang angesteuert wird, das Druckmedium aus einem Tank (34) des Arbeitsgerätes (11) jeweils den druckbeaufschlagten Anschlüssen (44, 46) des zumindest einen Haupt- und Zusatzzylinders (19, 28) zugeführt wird und dass der nicht druckbeaufschlagte Anschluss (46, 44) des jeweiligen Haupt-und Zusatzzylinders (19, 28) mit dem dazugehörigen druckbeaufschlagten Anschluss (44, 46) durch einen jeweiligen Kurzschlusskreislauf (48, 49) verbunden werden, so dass jeweils das aus dem Haupt- und Zusatzzylinder (19, 28) verdrängte Druckmedium über die nicht druckbeaufschlagten Anschlüsse (46, 44) abgeführt und den jeweiligen druckbeaufschlagten Anschlüssen (44, 46) desselben Haupt- und Zusatzzylinders (19, 28) zugeführt werden.

2. Verfahren nach Anspruch 1, **dadurch gekennzeichnet, dass** im zweiten Arbeitsdruckbereich, in dem die Schwenkbewegung im Arbeitsgang angesteuert wird, das Druckmedium aus dem Tank (38) dem druckbeauschlagten Anschluss (44) des zumindest einen Hauptzylinders (19) zugeführt wird, der nicht druckbeaufschlagte Anschluss (46) des Hauptzylinders (19) zum Abführen des verdrängten Druckmediums mit dem Tank (34) verbunden wird und zwischen dem nicht druckbeaufschlagten und druckbeaufschlagten Anschluss (46, 44) des Zusatzzylinders (28) ein Kurzschlusskreislauf (49) gebildet wird.

3. Verfahren nach Anspruch 1, **dadurch gekennzeichnet, dass** in dem dritten Arbeitsdruckbereich, in dem die Schwenkbewegung im Schwerlastgang angesteuert wird, das Druckmedium aus dem Tank (34) jeweils den druckbeaufschlagten Anschlüssen (44) des zumindest einen Hauptzylinders (19) und des zumindest einen Zusatzzylinders (28) zugeführt wird und die nicht druckbeaufschlagten Anschlüsse (46) des zumindest einen Hauptzylinders (19) und des zumindest einen Zusatzzylinders (28) zur Rückführung des Druckmediums mit dem Tank (34) verbunden werden.

4. Verfahren nach Anspruch 1, **dadurch gekennzeichnet, dass** der Arbeitsdruck während der Schwenkbewegung des Arbeitselementes (24) im Arbeitsbereich überwacht wird und zwischen dem ersten und dem zweiten Arbeitsdruckbereich ein erster Arbeitsdruckwert voreingestellt wird und zwischen dem zweiten und dem dritten Arbeitsbereich ein zweiter Arbeitsdruckwert voreingestellt wird und dass beim Überschreiten oder Unterschreiten der jeweiligen Arbeitsdruckwerte der entsprechende Arbeitsmodus angesteuert wird.

5. Verfahren nach einem der vorhergehenden Ansprüche, **dadurch gekennzeichnet, dass** der zumindest eine Zusatzzylinder (28) während der Senkbewegung des Arbeitselementes (24) als Dämpfungszylinder angesteuert wird, welcher dem Hauptzylinders (19) oder Hauptzylinderpaars entgegenwirkt, der die Senkbewegung durchführt.

6. Arbeitsgerät mit einem hydraulisch bewegbaren Arbeitselement (24), welches an einem Grundkörper (14) schwenkbar gelagert ist, mit zumindest einem Hauptzylinder (19) und zumindest einem Zusatzzylinder (28), die an dem Grundkörper (14) schwenkbar gelagert sind und an dem Arbeitselement (24) angreifen, durch welche das Arbeitselement (24) in einem Arbeitsbereich auf und ab bewegbar angesteuert wird, wobei der Haupt- und Zusatzzylinder (19, 28) jeweils einen kolbenkammerseitigen Anschluss (44) und einen kolbenstangenseitigen Anschluss (46) aufweisen und über Druckleitungen (35, 36) einer hydraulischen Steuerungseinrichtung (32) mit einem Druckmedium aus einem Tank (34), welches durch eine Pumpe (38) mit Druck beaufschlagt ist, versorgt werden, wobei die hydraulische Steuerungseinrichtung (32)
- eine erste Schaltungsanordnung aufweist, bei der das Arbeitselement (24) im Eilgang ansteuerbar ist,
- eine zweite Schaltungsanordnung aufweist, bei der das Arbeitselement (24) im Arbeitsgang ansteuerbar ist,
- eine dritte Schaltungsanordnung aufweist, bei der das Arbeitselement in einem Schwerlastgang ansteuerbar ist und
- zumindest ein Steuerungselement aufweist, welches die jeweilige Schaltungsanordnung ansteuert,
**dadurch gekennzeichnet,**
- **dass** bei der ersten Schaltungsanordnung die nicht druckbeaufschlagten Anschlüsse (44, 46) des zumindest einen Haupt- und Zusatzzylinders (19, 28) mit den druckbeaufschlagten Anschlüssen (44, 46) desselben Haupt-und Zusatzzylinders (19, 28) verbunden sind und jeweils einen Kurzschlusskreislauf (48, 49) zum Rückführen des verdrängten Mediums des Haupt- und Zusatzzylinders (19, 28) über den druckbeaufschlagten Anschluss (44, 46) in denselben Haupt- und Zusatzzylinder (19, 28) bilden.

7. Arbeitsgerät nach Anspruch 6, **dadurch gekennzeichnet, dass** bei der zweiten Schaltungsanordnung der druckbeaufschlagte Anschluss (44) und nicht druckbeaufschlagte Anschluss (46) des zumindest einen Hauptzylinders (19) mit dem Tank (34) verbunden sind und der nicht druckbeaufschlagte Anschluss (46) und der druckbeaufschlagte Anschluss (44) des zumindest einen Zusatzzylinders in einem Kurzschlusskreislauf (49) angeordnet sind.

8. Arbeitsgerät nach Anspruch 6, **dadurch gekennzeichnet, dass** bei der dritten Schaltungsanordnung der druckbeaufschlagte Anschluss und nicht druckbeaufschlagte Anschluss (44, 46) des zumindest einen Hauptzylinders (19) und der nicht druckbeaufschlagte Anschluss und druckbeaufschlagte Anschluss (44, 46) des zumindest einen Zusatzzylinders (28) mit dem Tank verbunden sind.

9. Arbeitsgerät nach Anspruch 6, **dadurch gekennzeichnet, dass** durch eine Zuführleitung (33) zusätzlich Druckmedium den jeweiligen Kurzschlusskreisläufen (48, 49) des zumindest einen Hauptzylinders (19) oder des zumindest einen Zusatzzylinders (28) oder beiden zuführbar ist.

10. Arbeitsgerät nach Anspruch 6, **dadurch gekennzeichnet, dass** der zumindest eine Hauptzylinder (19) einen Angriffspunkt (23) am Arbeitselement (24) aufweist, der abweichend zum Angriffspunkt (31) des zumindest einen Zusatzzylinders (28) ist und insbesondere einen abweichenden Abstand zu einer Lagerachse (18) aufweist.

11. Arbeitsgerät nach Anspruch 6, **dadurch gekennzeichnet, dass** der zumindest eine Zusatzzylinder (28) mit seiner Längsachse (30) mit einem von einer Längsachse (20) des zumindest einen Hauptzylinders (19) abweichenden Anstellwinkel zwischen dem als Tragarm (24) ausgebildeten Arbeitselement und dem als Oberwagen ausgebildeten Grundkörper (14) angeordnet ist oder dass der zumindest eine Zusatzzylinder (28) mit seiner Längsachse (30) parallel zur Längsachse (20) des zumindest einen Hauptzylinders (19) ausgerichtet ist.

12. Arbeitsgerät nach Anspruch 6, **dadurch gekennzeichnet, dass** das Arbeitselement (24) als Tragarm ausgebildet ist und der Tragarm eines Auslegers (17) mehrteilig mit einem Tragarmstummel (41) und zumindest einem Tragarmabschnitt (42) ausgebildet ist und eine Wechseleinrichtung (43) aufweist und der zumindest eine Zusatzzylinder (28) an einem Tragarmstummel (41) des Tragarmes (24) angreift oder dass der Tragarm (24) des Auslegers (17) mehrteilig ausgebildet ist und eine Wechseleinrichtung (43) aufweist und der zumindest eine Zusatzzylinder (28) am auswechselbaren Tragarmabschnitt (42) des Tragarms (24) angreift oder dass bei einem mehrteiligen Ausleger (17) mit zumindest zwei schwenkbar zueinander angeordneten Tragarmen (24) zwischen zwei Tragarmen (24) zumindest ein Zusatzzylinder (28) angeordnet ist, der einen abweichenden Hebelarm zum zumindest einen Hauptzylinder (19) zwischen den beiden Tragarmen (24) aufweist.

13. Arbeitsgerät nach Anspruch 12, **dadurch gekennzeichnet, dass** der an dem Tragarmabschnitt (42) angeordnete zumindest eine Zusatzzylinder (28) bei einem Wechsel des Tragarmabschnittes (42) mit diesem verbunden bleibt und vorzugsweise an dem auswechselbaren Tragarmabschnitt (42), insbesondere im Bereich der Wechseleinrichtung (43), ein zusätzliches Ventil zur Ansteuerung des zumindest einen Zusatzzylinders (28) vorgesehen ist.

14. Arbeitsgerät nach Anspruch 6, **dadurch gekennzeichnet, dass** der zumindest eine Zusatzzylinder (28) benachbart zum zumindest einen Hauptzylinder (19) oder zwischen zwei Hauptzylindern (19) angeordnet ist.

15. Arbeitsgerät nach Anspruch 6, **dadurch gekennzeichnet, dass** der zumindest eine Zusatzzylinder (28) als Nackenzylinder zwischen dem als Oberwagen ausgebildeten Grundkörper (14) und dem als Tragarm ausgebildeten Arbeitselement (24) angeordnet ist.

## Claims

1. A method for actuating a hydraulically movable working element (24), which is provided on a main body (14) of a working equipment (11), comprising at least one main cylinder (19) and at least one additional cylinder (28), which are pivotably mounted on the main body (14) and engage with the working element (24), by which the working element (24) is actuated so as to be movable up and down in a working range, the main and additional cylinders (19, 28) each comprising a connection (44) on the piston chamber side and a connection (46) on the piston rod side and being supplied via pressure lines (35, 36) of a hydraulic control device (32) and, in order to carry out a pivoting movement of the working element (24), being supplied with a pressure medium pressurised from a tank (34) by means of pumps (38) and in each case the connections (44) on the piston chamber side or the connections (46) on the piston rod side of the at least one main cylinder (19) and the at least one additional cylinder (28) being operated as pressurised connections, wherein
- the pivoting movement in the rapid motion mode is actuated in a first working pressure range of the hydraulic control device (32),
- the pivoting motion in a working motion mode is actuated in a second working pressure range, which is higher than the first working pressure range,
- the pivoting movement in the heavy load motion mode is actuated in a third working pressure range, which is higher than the first and second working pressure ranges, and
- the pivoting movement of the working element (24) in the operating modes of rapid motion, working motion or heavy load motion is actuated in accordance with the prevailing working pressure, **characterised in**
- **that** in the first working pressure range, in which the pivoting movement is actuated in the rapid motion mode, the pressure medium is fed from a tank (34) of the working equipment (11) to each of the pressurised connections (44, 46) of the at least one main and additional cylinders (19, 28), and in that the unpressurised connections (46, 44) of the respective main and additional cylinders (19, 28) are connected to the associated pressurised connection (44, 46) by a respective bypass circuit (48, 49) so that in each case the pressure medium discharged from the main and additional cylinders (19, 28) is carried off via the unpressurised connections (46, 44) and is fed to the respective pressurised connections (44, 46) of the same main and additional cylinders (19, 28).

2. The method according to claim 1, **characterised in that** in the second working pressure range, in which the pivoting movement is actuated in the working motion mode, the pressure medium is fed from the tank (38) to the pressurised connection (44) of the at least one main cylinder (19), the unpressurised connection (46) of the main cylinder (19) is connected to the tank (34) to carry off the discharged pressure medium, and a bypass circuit (49) is formed between the unpressurised and pressurised connections (46, 44) of the additional cylinder (28).

3. The method according to claim 1, **characterised in that** in the third working pressure range, in which the pivoting movement is actuated in the heavy motion mode, the pressure medium is fed from the tank (34) to each of the pressurised connections (44) of the at least one main cylinder (19) and the at least one additional cylinder (28), and the unpressurised connections (46) of the at least one main cylinder (19) and the at least one additional cylinder (28) for returning the pressure medium are connected to the tank (34).

4. The method according to claim 1, **characterised in that** the working pressure is monitored during the pivoting movement of the working element (24) in the working range, and a first working pressure value is preset between the first and second working pressure ranges, and a second working pressure value is preset between the second and third working ranges, and **in that** if the respective working pressure value is exceeded or is not met, the corresponding operating mode is actuated.

5. The method according to any one of the preceding claims, **characterised in that** the at least one additional cylinder (28) is actuated during the pivoting movement of the working element (24) as a damping cylinder which counteracts the main cylinder (19) or main cylinder pair which carries out the lowering movement.

6. A working equipment comprising a hydraulically movable working element (24) which is pivotably mounted on a main body (14), comprising at least one main cylinder (19) and at least one additional cylinder (28) which are pivotably mounted on the main body (14) and engage with the working element (24), by which the working element (24) is actuated so as to be movable up and down in a working range, the main and additional cylinders (19, 28) each comprising a connection (44) on the piston chamber side and a connection (46) on the piston rod side and being supplied with a pressure medium from a tank (34) via pressure lines (35, 36) of a hydraulic control device (32), which pressure medium is pressurised by a pump (38), wherein the hydraulic control device (32)
- comprises a first circuit arrangement in which the working element (24) is actuatable in the rapid motion mode,
- a second circuit arrangement in which the working element (24) is actuatable in the working motion mode,
- a third circuit arrangement in which the working element is actuatable in a heavy load motion mode, and
- comprises at least one control element, which controls the respective circuit arrangement, **characterised in**
- **that** in the first circuit arrangement the unpressurised connections (44, 46) of the at least one main and additional cylinders (19, 28) are connected to the pressurised connections (44, 46) of the same main and additional cylinders (19, 28), and in each case form a bypass circuit (48, 49) for returning the discharged medium of the main and primary cylinders (19, 28) via the pressurised connection (44, 46) in the same main and additional cylinders (19, 28).

7. The working equipment according to claim 6, **characterised in that** in the second circuit arrangement the pressurised connection (44) and unpressurised connection (46) of the at least one main cylinder (19) are connected to the tank (34), and the unpressurised connection (46) and the pressurised connection (44) of the at least one additional cylinder are arranged in a bypass circuit (49).

8. The working equipment according to claim 6, **characterised in that** in the third circuit arrangement the pressurised connection and the unpressurised connection (44, 46) of the at least one main cylinder (19) and the unpressurised connection and pressurised connection (44, 46) of the at least one additional cylinder (28) are connected to the tank.

9. The working equipment according to claim 6, **characterised in that** additional pressure medium is fed by a supply line (33) to the respective bypass circuits (48, 49) of the at least one main cylinder (19) or the at least one additional cylinder (28) or both.

10. The working equipment according to claim 6, **characterised in that** the at least one main cylinder (19) comprises a point of engagement (23) with the working element (24) which is different from the point of engagement (31) of the at least one additional cylinder (28) and in particular is arranged at a different distance from the bearing axis (18).

11. The working equipment according to claim 6, **characterised in that** the longitudinal axis (30) of the at least one additional cylinder (28) is arranged between the working element formed as a bearing arm (24) and the main body (14) formed as a revolving superstructure at a different angle from a longitudinal axis (20) of the at least-one main cylinder (19), or that the longitudinal axis (30) of the at least one additional cylinder (28) is oriented parallel to the longitudinal axis (20) of the at least one main cylinder (19).

12. The working equipment according to claim 6, **characterised in that** the working element (24) is formed as a bearing arm and the bearing arm of the boom (17) is formed in a number of parts comprising a bearing arm stump (41) and at least one bearing arm portion (42), and comprises a changing device (43), and the at least one additional cylinder (28) engages with a bearing arm stump (41) of the bearing arm (24), or that the bearing arm (24) of the boom (17) is formed in a number of parts and comprises a changing device (43), and the at least one additional cylinder (28) engages with the replaceable bearing arm portion (42) of the bearing arm (24) or that, in the case of a multi-part boom (17) comprising at least two bearing arms (24) arranged so as to be pivotable in relation to one another, at least one additional cylinder (28) is arranged between two bearing arms (24) and comprises, in contrast to the at least one main cylinder (19), a lever arm between the two bearing arms (24).

13. The working equipment according to claim 12, **characterised in that** the at least one additional cylinder (28) arranged on the bearing arm portion (42) remains connected to the bearing arm portion (42) when said bearing arm portion is changed and in particular an additional valve for actuating the at least one additional cylinder (28) is provided on the replaceable bearing arm portion (42), in particular in the region of the changing device (43).

14. The working equipment according to claim 6, **characterised in that** the at least one additional cylinder (28) is arranged adjacent to the at least one main cylinder (19) or between two main cylinders (19).

15. The working equipment according to claim 6, **characterised in that** the at least one additional cylinder (28) is arranged as a stick cylinder between the main body (14) designed as a revolving superstructure and the working element (24) designed as bearing arm.

## Revendications

1. Procédé destiné à commander un organe de travail (24) déplaçable hydrauliquement, lequel est prévu sur un corps de base (14) d'une machine de travail (11), avec au moins un vérin principal (19) et au moins un vérin auxiliaire (28), lesquels sont montés sur le corps de base (14) de manière à pouvoir pivoter et appuient contre l'organe de travail (24), grâce auxquels l'organe de travail (24) est activé de manière à monter et descendre dans une zone de travail donnée, le vérin principal (19) et le vérin auxiliaire (28) présentant chacun, du côté de la chambre de piston, un raccord (44) et, du côté de la tige de piston, un raccord (46) et étant alimentés par des conduites sous pression (35, 36) d'un dispositif de commande hydraulique (32), et étant alimentés, en vue de la réalisation d'un mouvement pivotant de l'organe de travail (24), par un fluide de compression provenant d'un réservoir (34) et mis sous pression au moyen d'une pompe (38), et les raccords (44) situés du côté de la chambre de piston ou les raccords (46) situés du côté de la tige de piston dudit au moins un vérin principal (19) et dudit au moins un vérin auxiliaire (28) étant respectivement activés en tant que raccords se trouvant sous pression,
- le mouvement pivotant étant activé en avance rapide dans une première gamme de pressions de fonctionnement du dispositif de commande hydraulique (32),
- le mouvement pivotant étant activé en une avance de travail dans une deuxième gamme de pressions de fonctionnement qui est plus élevée que la première gamme de pressions de fonctionnement,
- le mouvement pivotant étant activé en avance charge lourde dans une troisième gamme de pressions de fonctionnement qui est plus élevée que la première et la deuxième gamme de pressions de fonctionnement, et
- le mouvement pivotant de l'organe de travail (24) étant activé dans le mode de fonctionnement avance rapide, avance de travail ou avance charge lourde, en fonction de la pression de fonctionnement existante,
**caractérisé en ce que**
- dans la première gamme de pressions de fonctionnement, dans laquelle le mouvement pivotant est activé en avance rapide, le fluide de compression provenant d'un réservoir (34) de la machine de travail (11) est amené respectivement aux raccords (44, 46) sous pression desdits au moins un vérin principal et vérin auxiliaire (19, 28), et **en ce que** les raccords respectifs non sous pression (46, 44) du vérin principal et du vérin auxiliaire (19, 28) sont reliés par un circuit de court-circuitage respectif (48, 49) au raccord correspondant sous pression (44, 46) de sorte que le fluide de compression refoulé respectivement desdits vérin principal et vérin auxiliaire (19, 28) est évacué par les raccords non sous pression (44, 46) et est amené respectivement aux raccords sous pression (44, 46) de ces mêmes vérin principal et vérin auxiliaire (19, 28).

2. Procédé selon la revendication 1, **caractérisé en ce que** dans la deuxième gamme de pressions de fonctionnement, dans laquelle le mouvement pivotant est activé en avance de travail, le fluide de compression provenant du réservoir (38) est amené au raccord sous pression (44) dudit au moins un vérin principal (19), que le raccord non sous pression (46) du vérin principal (19) est relié au réservoir (34) afin d'évacuer le fluide de compression refoulé et qu'un circuit de court-circuitage (49) est formé entre le raccord non sous pression et celui sous pression (46, 44) du vérin auxiliaire (28).

3. Procédé selon la revendication 1, **caractérisé en ce que** dans la troisième gamme de pressions de fonctionnement, dans laquelle le mouvement pivotant est activé en avance charge lourde, le fluide de compression provenant du réservoir (34) est amené respectivement aux raccords sous pression (44) dudit au moins un vérin principal (19) et dudit au moins un vérin auxiliaire (28), et que les raccords non sous pression (46) dudit au moins un vérin principal (19) et dudit au moins un vérin auxiliaire (28) sont reliés au réservoir (34) en vue de la récupération du fluide de compression.

4. Procédé selon la revendication 1, **caractérisé en ce que** la pression de fonctionnement est contrôlée pendant le mouvement pivotant de l'organe de travail (24) dans la zone de travail, et qu'une première valeur de pression de fonctionnement est préréglée entre la première et la deuxième gamme de pressions de fonctionnement et qu'une deuxième valeur de pression de fonctionnement est préréglée entre la deuxième et la troisième gamme de pressions de fonctionnement et qu'en cas de dépassement ou de dépassement négatif des valeurs de pressions de fonctionnement respectives, le mode de fonctionnement correspondant est activé.

5. Procédé selon une quelconque des revendications précédentes, **caractérisé en ce que** ledit au moins un vérin auxiliaire (28) est activé pendant le mouvement de descente de l'organe de travail (24) en tant que vérin amortisseur, lequel agit en sens contraire du vérin principal (19) ou de la paire
de vérins principaux qui effectue ledit mouvement de descente.

6. Machine de travail avec un organe de travail (24)-déplaçable hydrauliquement, lequel est monté sur un corps de base (14) de manière à pouvoir pivoter, avec au moins un vérin principal (19) et au moins un vérin auxiliaire (28) qui sont montés
sur le corps de base (14) de manière à pouvoir pivoter et qui appuient contre l'organe de travail (24), grâce auxquels l'organe de travail (24) est activé de manière à monter et descendre dans une zone de travail donnée, le vérin principal (19) et le vérin auxiliaire (28) présentant chacun, du côté de la chambre de piston, un raccord (44) et, du côté de la tige de piston, un raccord (46), et lesquels étant alimentés par des conduites sous pression (35, 36) d'un dispositif de commande hydraulique (32) avec un fluide de compression provenant d'un réservoir (34) et qui est mis sous pression par une pompe (38), le dispositif de commande hydraulique (32) présentant:
- une première configuration de circuit dans laquelle l'organe de travail (24) peut être activé en avance rapide,
- une deuxième configuration de circuit dans laquelle l'organe de travail (24) peut être activé en avance de travail,
- une troisième configuration de circuit dans laquelle l'organe de travail peut être activé en une avance charge lourde, et
- au moins un organe de commande qui active la configuration de circuit respective.
**caractérisée en ce que**
- dans la première configuration de circuit, les raccords non sous pression (44, 46) dudit au moins un vérin principal (19) et dudit au moins un vérin auxiliaire (28) sont reliés aux raccords sous pression (44, 46) de ces mêmes vérin principal et vérin auxiliaire (19, 28) et forment respectivement un circuit de court-circuitage (48, 49) en vue de la récupération du fluide refoulé desdits vérin principal et vérin auxiliaire (19, 28) via le raccord sous pression (44, 46) dans ces mêmes vérin principal et vérin auxiliaire (19, 28).

7. Machine de travail selon la revendication 6, **caractérisée en ce que**, dans la deuxième configuration de circuit, le raccord sous pression (44) et le raccord non sous pression (46) dudit au moins un vérin principal (19) sont reliés au réservoir (34), et que le raccord non sous pression (46) et le raccord sous pression (44) dudit au moins un vérin auxiliaire sont placés dans un circuit de court-circuitage (49).

8. Machine de travail selon la revendication 6, **caractérisée en ce que**, dans la troisième configuration de circuit, le raccord sous pression et le raccord non sous pression (44, 46) dudit au moins un vérin principal (19), et le raccord non sous pression et le raccord sous pression (44, 46) dudit au moins un vérin auxiliaire (28) sont reliés au réservoir.

9. Machine de travail selon la revendication 6, **caractérisée en ce que** du fluide de compression supplémentaire peut être amené par un conduit d'amenée (33) aux circuits de court-circuitage (48, 49) respectifs dudit au moins un vérin principal (19) ou dudit au moins un vérin auxiliaire (28) ou aux deux à la fois.

10. Machine de travail selon la revendication 6, **caractérisée en ce que** ledit au moins un vérin principal (19) présente un point d'application (23) sur l'organe de travail (24) qui est différent du point d'application (31) dudit au moins un vérin auxiliaire (28) et présente notamment un écart différent par rapport à un axe de palier (18).

11. Machine de travail selon la revendication 6, **caractérisée en ce que** l'axe longitudinal (30) dudit au moins un vérin auxiliaire (28) est disposé entre l'organe de travail réalisé sous forme de bras porteur (24) et le corps de base (14) réalisé sous forme de chariot supérieur avec un angle d'attaque différent d'un axe longitudinal (20) dudit au moins un vérin principal (19), ou **en ce que** l'axe longitudinal (30) dudit au moins un vérin auxiliaire (28) est orienté parallèlement à l'axe longitudinal (20) dudit au moins un vérin principal (19).

12. Machine de travail selon la revendication 6, **caractérisée en ce que** l'organe de travail (24) est réalisé sous forme de bras porteur et que le bras porteur d'une flèche (17) est réalisé en plusieurs pièces avec un tronçon de bras porteur (41) et au moins une partie de bras porteur (42) et présente un dispositif de changement (43), et que ledit au moins un vérin auxiliaire (28) appuie contre un tronçon de bras porteur (41) du bras porteur (24), ou **en ce que** le bras porteur (24) de la flèche (17) est réalisé en plusieurs pièces et présente un dispositif de changement (43) et que ledit au moins un vérin auxiliaire (28) appuie contre la partie de bras porteur échangeable (42) du bras porteur (24), ou **en ce que**, dans le cas d'une flèche (17) en plusieurs pièces avec au moins deux bras porteurs (24) disposés de manière pivotante l'un par rapport à l'autre, au moins un vérin auxiliaire (28) est disposé entre les deux bras porteurs (24) et présente un bras de levier différent par rapport audit au moins un vérin principal (19) entre les deux bras porteurs (24).

13. Machine de travail selon la revendication 12, **caractérisée en ce que**, lors d'un changement de la partie de bras porteur (42), ledit au moins un vérin auxiliaire (28) disposé sur la partie de bras porteur (42) reste relié à celle-ci et qu'une soupape supplémentaire destinée à activer ledit au moins un vérin auxiliaire (28) est prévue de préférence dans la partie de bras porteur échangeable (42), notamment dans la zone du dispositif de changement (43),

14. Machine de travail selon la revendication 6, **caractérisée en ce que** ledit au moins un vérin auxiliaire (28) est disposé de manière contiguë audit au moins un vérin principal (19) ou entre deux vérins principaux (19).

15. Machine de travail selon la revendication 6, **caractérisée en ce que** ledit au moins un vérin auxiliaire (28) est disposé en tant que vérin de balancier entre le corps de base (14) réalisé sous forme de chariot supérieur et l'organe de travail (24) réalisé sous forme de bras porteur.
